# DEMANDE DE BREVET EUROPEEN

(11) **EP 1 493 787 A1**
(43) Date de publication de la demande: **05.01.2005**
(21) Numéro de dépôt: 03447174.8
(22) Date de dépôt: 01.07.2003
(51) Int. Cl.: C09D 175/00, B05D 5/08

(54) **Revêtement protecteur ultra-résistant pour produits non-poreux**

(71) Demandeur: Daems, Mathieu, 4431 Loncin (BE)
(72) Inventeur: Daems, Mathieu, 4431 Loncin (BE)

(57) **Abrégé**

Revêtement protecteur ultra-résistant pour produits lisses non poreux, composé d'isomères benzéniques, à savoir un mélange de O-xylène, M-xylènes et P-xylène, d'un adjuvant et/ou liant, d'un pigment colorant, d'un diluant et d'un durcisseur choisi dans la gamme des aliphatiques.

Ce revêtement, déposé en général, en une seule couche confère au substrat ainsi revêtu, la coloration, la protection aux intempéries, aux UV, au jaunissement ainsi qu'une résistance permettant, même après plusieurs nettoyages, l'enlèvement des graffitis

La structure de finition pourra être soit lisse soit, par addition d'un polyamide et/ou d'une résine thermoplastique, structurée.

## Description

Les matériaux intervenant dans diverses fabrications, telles que dans le bâtiment entre autre, ont fortement évolués (plastic, métal, etc... souvent en remplacement du bois) et, tant les moyens de mises en oeuvre que les moyens de protection contre les attaques extérieures ont dus également évoluer pour s'adapter à ces nouveaux matériaux.

Les techniques de protection par peinture et/ou vernissage des matériaux en bois étaient favorisées par la porosité de ce matériau mais elles se révèlent inefficaces sur des matériaux non poreux tels que le métal ou le plastic.

En effet:
- les vernis n'ont aucune adhérence sur le PVC et sont très peu adhérents sur l'aluminium
- l'émail ainsi que le latex n'ont également aucune adhérence sur ce type de produit.

Il a donc fallu trouver d'autres solutions pour leur protection contre les attaques extérieures, qui elles aussi, ont fortement évolués (attaques acide de l'atmosphère et des pluies suite aux rejets des industries et autres).

Les techniques les plus connues appliquées actuellement consistent:
- à colorer le matériau dans la masse, celui-ci étant dès lors produit directement dans la couleur désirée
   - l'inconvénient majeur de cette méthode est que, entre autre pour le plastic, seule la couleur blanche résiste aux attaques extérieures. En conséquence, bien que d'autres couleurs (brun, gris, beige, vert etc...) puissent être produites, elles sont malheureusement de qualité inférieure.
- à utiliser la méthode de coextrusion qui consiste à fusionner un film plastic de la couleur désirée avec le support généralement lui aussi en plastic.
   - les inconvénients majeurs de cette méthode sont :
      - son prix de production qui est très élevé
      - une limitation du choix des coloris.
- au laminage simultané du matériau et d'un film de recouvrement industriellement coloré
   - les inconvénients sont les mêmes que pour la méthode précédente à savoir:
      - son prix très élevé
      - pour que la résistance du film de recouvrement soit satisfaisante, ce procédé doit être effectué dans des normes très strictes.

D'autres peintures existent également sur le marché mais elles présentent généralement une mauvaise résistance aux produits chimiques ou à l'acétone et leur pouvoir de couverture est faible sur support lisse et non poreux.

En outre, tous ces procédés demandent l'apport d'une couche de colle de caoutchouc, nécessairement sans solvant polluant pour respecter les normes sur les polluants, ceci de manière à apporter en plus de la protection contre les attaques extérieures, une certaine protection contre les dégradations lors de leurs manipulations et/ou transformations ultérieures. Et c'est uniquement grâce à cela que le travail du matériau ainsi protégé peut, même dans un système automatisé, s'effectuer sans dégâts.

Diverses méthodes et produits, généralement protégés, sont connus et utilisés.

Ainsi, dans le brevet RU 2 153 514 il est décrit une peinture pour matériaux de finition pour construction et qui comprend entre autre une gomme latex acrylique et par là un revêtement qui ne présente pas une garantie d'adhérence sur matériaux lisses ainsi que signalé supra.

De plus dans la composition donnée on note, entre autres éléments, la présence de chaux, de kaolin, de mica, de talc ainsi que d'eau, cette dernière étant caractéristique des latex. Ces éléments sont généralement à proscrire pour les revêtements des surfaces lisses.

Dans le brevet US 3,655,432 il s'agit d'un revêtement transparent destiné plus particulièrement au domaine optique et qui, ainsi qu'indiqué, ne peut pas être soumis à un nettoyage sévère tel que celui nécessité, entre autre, pour l'enlèvement de graffitis.

De même dans le brevet US 3,647,510 le produit doit être chauffé pendant un temps relativement long (1 à 10h). Ensuite ce produit partiellement condensé, doit être concentré en le chauffant (temp. 70° à 150°C) pour ôter certains alcools et l'eau. Ces températures provoqueraient inévitablement des déformations des supports (PVC, plastic) sur lesquels le revêtement serait déposé.

La présente invention apporte une solution aux inconvénients présentés par les diverses méthodes ci-avant. Elle consiste en une application, en atelier, en une seule couche d'une peinture colorante ultra-résistante disponible dans une vaste gamme de couleurs (les 2.000 teintes du RAL ) et adaptée à tout type de matériau à surface lisse non poreuse, tels entre autres que PVC, aluminium. etc ...

Cette peinture présente des propriétés spécifiques telles que :
- une grande résistance à l'arrachage pratiqué avec un ruban adhésif (essai "scratch")
- une grande dureté
- une grande résistance à l'abrasion ainsi qu'aux intempéries
- une grande stabilité dans les teintes et la brillance
- une grande résistance à la lumière, particulièrement aux UV, ainsi qu'au jaunissement
- une très grande résistance, chose importante en notre époque, aux graffitis
- une résistance remarquable, même après plusieurs nettoyage, aux produits mordants nécessaires à cet effet tels que l'ammoniaque, la térébenthine, l'acétone, le sassi, le thinner ou encore le pétrole ou le perchloréthylène.
Ce nettoyage s'effectuant bien entendu avec des moyens adéquats (chiffon doux) pour éviter de provoquer des amorces d'attaques en griffant la surface revêtue.

La peinture, objet de la présente invention, est composée d'un convecteur à tendance thermoplastique, donc réagissant à la température, et est formée d'un mélange d'isomères benzéniques, à savoir O-xylène, M-xylènes et P-xylène (18 à 25 % en volume), ces derniers permettant l'ajoute d'adjuvants ou liants (0,5 à 3 % en volume) pour renforcer la résistance à l'abrasion de la couleur. On incorpore ensuite un pigment colorant (11 à 15 % en volume) pour donner la teinte voulue, un diluant (19 à 29 % en volume) pour avoir un aplat correct et une meilleure élasticité ainsi qu'un durcisseur ("hardener") (30,5 à 49 % en volume) qui assure un durcissement plus rapide et par là une plus grande souplesse et une adhérence plus ferme de la peinture sur le matériau. Ce durcisseur consiste en une transalkylation de méthylbenzène. Il peut s'agir d'un aliphatique ou de préférence d'un hexaméthylisocyanate.

Suivant la finition désirée, lisse ou structurée, on ajoutera, pour obtenir ce dernier aspect de surface, à cette composition de base un polyamide de type connu..

Après nettoyage et dégraissage du support on y pulvérise la peinture.

Le produit ainsi revêtu passe alors dans un four de séchage ou il sera soumis à une température de 30 à 75°C, de préférence entre 45 et 50°C, et ce dans une atmosphère exempte de poussière pour éviter toute pollution du revêtement et par là une dégradation de son aspect extérieur. De toute manière il est impératif de ne pas dépasser la température de 75°C maximum ceci afin d'éviter toute déformation des produits revêtus (PVC et plastic). La polymérisation complète (environ 72 h) de la peinture s'effectuant ensuite à l'air libre.

Les caractéristiques extérieures (température et humidité) peuvent également avoir une certaine influence sur les diverses conditions de séchage. Ces dernières pourront éventuellement être adaptées en fonction de ces données ceci en restant dans la gamme citée.

Nous donnons ci-après, à titre d'exemple non limitatif, une méthode d'application de la peinture objet de l'invention.

Avant application de la peinture, il y a lieu de nettoyer et de dégraisser le support à recouvrir. Ce nettoyage et ce dégraissage seront effectués, de préférence par pulvérisation d'un dégraisseur de type classique et connu et on laissera alors sécher le support à l'air libre. Ensuite, dans une unité de préférence automatisée, on pulvérisera la peinture sur ledit support séché. En effet, une pulvérisation automatique continue donne une coloration de surface plus homogène qu'une pulvérisation manuelle.

S'il est jugé utile ou éventuellement nécessaire, la peinture pourra être appliquée en plusieurs couches, ces couches successives présenteront les mêmes propriétés et par là, la même résistance aux attaques extérieures qu'une mono-couche. Elles présenteront également la même couleur puisque ces couches sont de même composition et qu'elles sont diffusées en continu.

Après application de la ou des couches, les produits seront séchés dans un four étanche pour éviter, autant que faire se peut, de dégrader le revêtement par accrochage de poussière et de ce fait d'en ternir l'esthétique. La température de séchage sera comprise entre 45 et 50°C.

Bien qu'on ait décrit une méthode préférée d'application de la peinture objet du présent brevet il est bien entendu que d'autres méthodes peuvent également être appliquées tout en restant dans le cadre inventif repris

## Revendications

1. Revêtement protecteur ultra-résistant pour produits lisses non poreux **caractérisé en ce qu'**il est composé d'isomères benzéniques, à savoir un mélange de O-xylène, M-xylènes et P-xylène (18 à 25% en volume), d'un adjuvant et/ou liant (0,5 à 3% en volume), d'un pigment colorant (11 à 15% en volume), d'un diluant (19 à 29% en volume) et d'un durcisseur (30,5 à 49% en volume).

2. Revêtement suivant revendication 1 **caractérisé en ce que** ce durcisseur est choisi dans la gamme des aliphatiques

3. Revêtement selon revendications précédentes **caractérisé en ce que** de durcisseur consiste en une transalkylation de méthylbenzène

4. Revêtement suivant revendications précédentes **caractérisé en ce que** ce durcisseur est un hexaméthylisocianate.

5. Revêtement suivant revendications précédentes **caractérisé en ce que** pour obtenir une finition structurée on ajoute un polyamide.

6. Revêtement suivant revendications précédentes **caractérisé en ce que** pour obtenir une finition structurée on ajoute une résine thermoplastique.

7. Revêtement suivant revendications précédentes **caractérisé en ce qu'**on sèche le produit revêtus à une température comprise entre 30 et 75°C et ce dans un four avec atmosphère exempte de poussière

8. Revêtement suivant revendications précédentes **caractérisé en ce que** la température de séchage est de préférence comprise entre 45 et 50°C

9. Revêtement suivant revendications précédentes **caractérisé en ce que** son application s'effectue en une seule couche donnant la coloration, la protection du matériau et une surface résistant, même après plusieurs nettoyages, aux produits utilisés pour l'enlèvement des graffitis quels qu'ils soient.
